# EUROPEAN PATENT SPECIFICATION

(11) **EP 2 583 997 B1**
(45) Date of publication and mention of the grant of the patent: **22.04.2015**
(21) Application number: 11795809.0
(22) Date of filing: 16.06.2011
(51) Int. Cl.: C08L 23/00, C08K 3/04, C08L 25/08, C08L 53/00, C08L 71/00

(54) **POLYOLEFIN RESIN COMPOSITION AND PROCESS FOR PRODUCING SAME**
POLYOLEFINHARZZUSAMMENSETZUNG UND VERFAHREN ZU IHRER HERSTELLUNG
COMPOSITION DE RÉSINE POLYOLÉFINIQUE ET SON PROCÉDÉ DE PRODUCTION

(30) Priority: 24.09.2010 JP 2010213538; 24.09.2010 JP 2010213539; 24.09.2010 JP 2010213543; 01.07.2010 JP 2010150762; 16.06.2010 JP 2010137008; 16.06.2010 JP 2010136706
(43) Date of publication of application: 24.04.2013
(73) Proprietor: Sekisui Chemical Co., Ltd., Osaka 530-8565 (JP)
(72) Inventor: TAKAHASHI Katsunori, Mishima-gun Osaka 618-8589 (JP); MUKOHATA Daisuke, Mishima-gun Osaka 618-8589 (JP); TANIGUCHI Kouji, Mishima-gun Osaka 618-8589 (JP); NARUTA Mitsuru, Mishima-gun Osaka 618-8589 (JP); NOZATO Shouji, Mishima-gun Osaka 618-8589 (JP); NAGATANI Naoyuki, Mishima-gun Osaka 618-8589 (JP); TSUMURA Kensuke, Mishima-gun Osaka 618-8589 (JP); SAWA Kazuhiro, Mishima-gun Osaka 618-8589 (JP)
(74) Representative: ter Meer, Nicolaus
(86) International application number: PCT/JP2011/063814
(87) International publication number: WO 2011/158907

(56) References cited:
- JP-A- 2007 100 027
- JP-A- 2007 103 297
- JP-A- 2008 239 746
- JP-A- 2010 506 013
- JP-A- 2010 506 014
- US-A1- 2008 149 363
- US-A1- 2008 242 793

## Description

### Technical Field

The present invention relates to a polyolefin-based resin composition and a process for producing the same.

### Background Art

Flaked graphite has recently attracted attention as a substance having a carbon skeleton and high shape anisotropy. Flaked graphite is obtained by separating graphene sheets from graphite. Due to its high hardness, flaked graphite can be expected to act as a reinforcing material when mixed with a synthetic resin. Graphene sheets are separated from graphite multiple times to provide the flaked graphite having a high specific surface area. Therefore, the amount of flaked graphite required to be added can be decreased. This may minimize various risks usually associated with a synthetic resin containing flaked graphite, such as increased specific gravity and loss of brittleness. Furthermore, flaked graphite is also expected to affect the expression of various functions. For this reason, flaked graphite has been widely studied in various fields.

In contrast, polyolefin-based resins can be easily handled from the viewpoint of moldability, cost of distribution and impact on the environment, and have been used widely. In recent years, the addition of a conductive filler to a polyolefin-based resin improves the mechanical and physical properties such as rigidity, strength, and shock resistance and imparts electric properties such as conductivity, antistatic properties, and antielectricity. For this reason, a polyolefin-based resin has been attempted to be applied and developed in various fields.

For example, Patent Literature 1 discloses a polyolefin-based resin composition containing a polyolefin-based resin obtained by homopolymerization or copolymerization of an α-olefin having 2 to 6 carbon atoms, a crystalline higher α-olefin polymer containing 50% by mole or more of an α-olefin unit having 8 or more carbon atoms, and a carbon nanotube as a conductive filler.

However, carbon nanotubes have characteristics of easy to aggregate physically and chemically. Also in the polyolefin-based resin composition described in Patent Literature 1, carbon nanotubes exist in the form of aggregate tightly entangled one another. The aggregated carbon nanotube is difficult to be uniformly dispersed even by the application of physical force such as ultrasonic irradiation. Therefore, the polyolefin-based resin composition described in Patent Literature 1 has problems in which mechanical and physical properties are difficult to be improved and electric properties such as conductivity cannot be imparted sufficiently.

The use of flaked graphite has been proposed instead of carbon nanotubes. However, the uniform dispersion of flaked graphite in a polyolefin-based resin composition is still difficult.

Further, in order to provide a resin composition having excellent mechanical and physical properties such as rigidity and shock resistance and excellent moldability, Patent Literature 2 discloses a resin composition containing a fibrous filler having an average particle diameter of 0.1 to 30 µm and an aspect ratio of 20 to 80, an inorganic nanofiller having an average particle diameter of 300 nm or less, and a polypropylene resin.

Further to this, examples detailed in Patent Document 2 describe a composition containing polypropylene, fine nanoscale silica particles, and glass fibers, where the composition has excellent moldability and good surface appearance, and the bending modulus and the impact test results are both improved. Moreover, Patent Literature 2 describes that the resin composition can be used for the exterior panels of automobiles. However, Patent Literature 2 does not describe significant physical values such as the modulus of elongation and coefficient of linear expansion of the resin composition.

The resin composition described above contains a fibrous filler, and the fibrous filler has the disadvantage of being difficult to handle. In addition, a molded product formed using the resin composition displays surface deterioration.

### Citation List

### Patent Literature

US 2008/0149363 discloses a composition comprising a polyolefin polymer and an expanded graphite, wherein the polyolefin polymer is polypropylene or polyethylene homopolymer or a polypropylene or polyethylene copolymer.
Patent Literature 1: Japanese Patent Application Laid-Open No. 2007-039592
Patent Literature 2: Japanese Patent Application Laid-Open No. 2004-182826

### Summary of Invention

### Technical Problem

The present invention provides a polyolefin-based resin composition in which flaked graphite is uniformly dispersed. The present invention provides a polyolefin-based resin composition capable of providing a molded product having a high modulus of elongation and a low coefficient of linear expansion and a process for producing the same.

### Solution to Problem

The polyolefin-based resin composition of the present invention is a composition according to claim 1.

The polyolefin-based resin is a synthetic resin obtained by polymerization or copolymerization of an olefin-based monomer having a radical-polymerizable unsaturated double bond. The type of olefin-based monomer to be used is not particularly limited, and examples thereof may include α-olefins such as ethylene, propylene, 1-butene, 1-pentene, 1-hexene, 1-heptene, 1-octene, and 4-methyl-1-pentene, and conjugated dienes such as butadiene and isoprene. The olefin-based monomer may be used alone or two or more kinds thereof may be used in combination.

The type of polyolefin-based resin to be used is also not particularly limited, and examples thereof may include homopolymers of ethylene, copolymers of ethylene and α-olefins, other than ethylene, in which the ethylene component exceeds 50% by weight, homopolymers of propylene, copolymers of propylene and α-olefins, other than propylene, in which the propylene component exceeds 50% by weight, homopolymers of butene, and homopolymers or copolymers of conjugated dienes such as butadiene and isoprene. Homopolymers of propylene, and copolymers of propylene and α-olefins, other than propylene, in which the propylene component exceeds 50% by weight, are preferable. The polyolefin-based resin may be used alone or two or more kinds thereof may be used in combination.

The polyolefin-based resin may contain a monomer component other than the olefin-based monomer as a copolymer component. Examples of the monomer component may include acrylic acid, methacrylic acid, acrylic ester, methacrylic ester, and vinyl acetate.

Examples of the polyolefin-based resin containing a monomer component other than the olefin-based monomer as a copolymer component may include ethylene-acrylic acid copolymers, ethylene-methacrylic acid copolymers, ethylene-acrylic ester copolymers, and ethylene-methacrylic ester copolymers.

The flaked graphite is obtained by flaking off graphene sheets from a graphite compound. The flaked graphite is a layered body of a plurality of graphene sheets. Since graphene sheets are flaked off from the graphite compound to obtain the flaked graphite, the flaked graphite is the layered body of graphene sheets which is thinner than the graphite compound to be used as the raw material, that is, the flaked graphite is a layered body of graphene sheets having fewer layers than the number of layers of graphene sheets that make up the graphite compound as a raw material. In the present invention, the graphene sheet is a sheet-shaped substance composed of a carbon hexagonal net plane. The graphite compound may be graphite or an oxidized graphite such as expanded graphite. An oxidized graphite such as expanded graphite is preferable, and expanded graphite is more preferable. The graphene sheets are easily flaked off from the oxidized graphite. Further, a functional group may be bonded with the graphite chemically or artificially through weak interactions.

It is preferable that the graphite be graphite having a single multi-layer structure as a whole particle. Examples of the graphite may include natural graphite, kish graphite, and high orientation thermal decomposition graphite. The natural graphite and kish graphite are a single crystal of graphene sheets (forming a basic layer) each having roughly one crystal direction or an assembly thereof. The high orientation thermal decomposition graphite is an assembly of many small crystals of graphene sheets (forming a basic layer) having different crystal directions.

As expanded graphite, already known one is used. As a method for producing expanded graphite, known methods are used. For example, natural graphite is immersed in an aqueous solution of sulfuric acid and nitric acid, taken out, and washed with water to obtain a residual compound. The residual compound is rapidly heated to decompose a compound penetrating between the layered faces of natural graphite. Thus, the spaces between the layered faces of natural graphite are enlarged to expand the natural graphite. In this way, expanded graphite is produced.

The type of method used for flaking off graphene sheets from a graphite compound is not particularly limited, and examples thereof may include (1) the Hummers-Offeman method (W. S. Hummers et al., J. Am. Chem. Soc., 80, 1339(1958)) in accordance with Japanese Patent Application Laid-Open No. 2002-53313, (2) a method for flaking off graphene sheets from graphite oxide formed by a method described in U. S. Patent No. 2798878 followed by purification, (3) a method for flaking off graphene sheets from a graphite oxide intercalation compound through rapid heating as described in Japanese Translation of PCT Application No. 2009-511415, and (4) a method for flaking off graphene sheets from a graphite compound through exposure of the graphite compound to a high-pressure fluid such as a supercritical fluid and a sub-critical fluid.

The supercritical fluid is a fluid at a temperature equal to or higher than the temperature of its critical point (critical temperature Tc) and a pressure equal to or higher than the pressure of its critical point (critical pressure Pc). The sub-critical fluid is a fluid at a temperature and pressure near or slightly lower than those of its critical point.

When the mean size of flaked graphite in the plane direction of a graphene sheet is short, the aspect ratio of flaked graphite is small. As a result, the total surface area of the flaked graphite added to the polyolefin-based resin composition is decreased, and advantages obtained due to the flaked graphite being contained therein may be decreased. When the mean size is large, the flaked graphite is likely to aggregate within the resin. Or alternatively, when gaps are generated between the polyolefin-based resin and the flaked graphite, the gaps may be enlarged. Therefore, the mean size of flaked graphite in the plane direction of a graphene sheet is preferably 0.05 to 20 µm, more preferably 0.05 to 10 µm, and particularly preferably 0.05 to 6 µm.

The size of flaked graphite in the plane direction of a graphene sheet is the maximum size of the flaked graphite seen from a direction in which the area of the flaked graphite is largest. The size of flaked graphite in the plane direction of a graphene sheet is a value measured by SEM. The mean size of flaked graphite in the plane direction of a graphene sheet is an arithmetic mean size of each flaked graphite in the plane direction of graphene sheet.

The number of layers of a graphene sheet of flaked graphite is preferably 300 or less, more preferably 200 or less, and particularly preferably 90 or less. The number of layers of graphene sheets of flaked graphite can be observed by a transmission electron microscope (TEM), and is an arithmetic mean of the number of layers of graphene sheet of each flaked graphite.

In order to adjust the carbon content of the flaked graphite or the oxygen content, the flaked graphite may be reduced. Examples of reducing the flaked graphite may include a method for exposing flaked graphite to a reducing agent and a method for heating flaked graphite. Examples of the reducing agent include hydrazine, dimethyl hydrazine, and diethyl hydroxylamine. The reducing agent may be used alone or two or more kinds thereof may be used in combination.

When the content of flaked graphite in the polyolefin-based resin composition is small, the mechanical strength of a molded product formed using the polyolefin-based resin composition may be decreased. When the content of flaked graphite is large, the toughness and moldability of the polyolefin-based resin composition may be decreased. Therefore, the content of flaked graphite in the polyolefin-based resin composition is preferably 0.01 to 50 parts by weight, and more preferably 0.01 to 10 parts by weight, relative to 100 parts by weight of the polyolefin-based resin.

In order to uniformly disperse flaked graphite in the polyolefin-based resin, the polyolefin-based resin composition comprises either one or both of a compound with a six-membered ring structure and a compound with a five-membered ring structure. In the compound with a six-membered ring structure or the compound with a five-membered ring structure, the six-membered ring or five-membered ring structure moiety is tightly adsorbed or bonded to the flaked graphite, and any residual structure moiety is dissolved in the polyolefin-based resin. Thus, the flaked graphite can be uniformly dispersed in the polyolefin-based resin.

The compound with a six-membered ring structure is polymer containing a styrene component selected from the group containing a styrene-ethylene/propylene block copolymer, a styrene-ethylene/propylene-styrene block copolymer, a styrene-ethylene/butylene-styrene block copolymer, and a styrene-(ethylene-ethylene/propylene)-styrene block copolymer. Further, a styrene-olefin copolymer is more preferable than a styrene-diene copolymer. This is because the styrene-olefin copolymer has excellent compatibility with the polyolefin-based resin, allows flaked graphite to be uniformly dispersed in the polyolefin-based resin, and can improve brittleness thereby enhancing the mechanical strength of the polyolefin-based resin composition. The compound with a six-membered ring structure may be used alone or two or more kinds thereof may be used in combination. For the compound with a six-membered ring structure, "Septon" (trade name) is available from Kuraray Co., Ltd., "Tuftec" (trade name) is available from Asahi Kasei Corporation, "Rabalon" (trade name) is available from Mitsubishi Chemical Corporation, and "Kraton" (trade name) is available from Ktaton Polymer.

When the content of the styrene component in the polymer containing a styrene component is large, the styrene components of the polymer containing a styrene component interact with each other in the polyolefin-based resin to form an aggregate of the polymer containing a styrene component. As a result, mechanical and physical properties such as the modulus of elongation and the coefficient of linear expansion of the polyolefin-based resin composition may be decreased. Therefore, the content of the styrene component in the polymer containing a styrene component is preferably 40% by weight or less, and more preferably 30% by weight or less. When the content of the styrene component in the polymer containing a styrene component is small, the six-membered ring moiety of the polymer containing a styrene component cannot be sufficiently adsorbed or bonded to the flaked graphite, and the flaked graphite may not be uniformly dispersed in the polyolefin-based resin. Therefore, the content of the styrene component in the polymer containing a styrene component is preferably 3% by weight or more, and more preferably 5% by weight or more.

The compound with a six-membered ring can be used particularly in combination with flaked graphite having a large carbon content, preferably flaked graphite having a carbon content of 80 atm% or more, and more preferably flaked graphite having a carbon content of 90 atm% or more. The flaked graphite having a large carbon content is rich in the flat SP2 network, and therefore is likely to interact with the compound with a six-membered ring in the graphene sheet. Thus, the flaked graphite cannot aggregate in the polyolefin-based resin composition and can be uniformly dispersed in a stable state. The carbon content of the flaked graphite can be measured by ESCA.

The type of compound with a five-membered ring structure to be used is polyvinylpyrrolidone.

When the content of the compound with a six-membered ring structure in the polyolefin-based resin is small, the dispersibility of flaked graphite may be decreased. When the content is large, the physical properties of the polyolefin-based resin may deteriorate. Therefore, the content of the compound with a six-membered ring structure in the polyolefin-based resin is preferably 0.01 to 30 parts by weight, and more preferably 0.01 to 10 parts by weight, relative to 100 parts by weight of the polyolefin-based resin.

When the content of the compound with a five-membered ring structure in the polyolefin-based resin is small, the dispersibility of flaked graphite may be decreased. When the content is large, the physical properties of the polyolefin-based resin may deteriorate. Therefore, the content of the compound with a five-membered ring structure in the polyolefin-based resin is preferably 0.01 to 30 parts by weight, and more preferably 0.01 to 10 parts by weight, relative to 100 parts by weight of the polyolefin-based resin.

When the polyolefin-based resin composition contains the compound with a six-membered ring structure and the compound with a five-membered ring structure and the total content of the compounds in the polyolefin-based resin is small, the dispersibility of flaked graphite may be decreased. When the total content is large, the physical properties of the polyolefin-based resin may deteriorate. Therefore, the total content of the compound with a six-membered ring structure and the compound with a five-membered ring structure in the polyolefin-based resin is preferably 0.01 to 30 parts by weight, and more preferably 0.01 to 10 parts by weight, relative to 100 parts by weight of the polyolefin-based resin.

In the compound with a six-membered ring structure and the compound with a five-membered ring structure, the six-membered ring structure and the five-membered ring structure may include a conjugated double bond. The compound with a six-membered ring structure may contain a surfactant having a cyclic structure including a conjugated double bond. The compound with a six-membered ring structure may be a surfactant having a cyclic structure including a conjugated double bond. The surfactant is a compound which is dissolved in a liquid to remarkably decrease the surface tension of the liquid.

In the surfactant having a cyclic structure including a conjugated double bond, the cyclic structure moiety including a conjugated double bond is tightly adsorbed or bonded to the flaked graphite, and any residual structure moiety is dissolved in the polyolefin-based resin. As a result, the flaked graphite can be uniformly dispersed in the polyolefin-based resin.

The type of six-membered ring structure including a conjugated double bond to be used is not particularly limited, and examples thereof may include cyclic structures having a π electron swarm such as a benzene ring, a naphthalene ring, an anthracene ring, and a phenanthrene ring. A benzene ring is preferable.

The the surfactant having a six-membered ring structure including a conjugated double bond is at least one type selected from the group consisting of polyoxyalkylene octyl phenyl ethers (for example, polyoxyethylene octyl phenyl ether), polylxyalkylene nonyl phenyl ethers (for example, polyoxyethylene nonyl phenyl ether), polyoxyalkylene dodecyl phenyl ethers (for example, polyoxyethylene dodecyl phenyl ether), polyoxyalkylene benzyl phenyl ethers (for example, polyoxyethylene benzyl phenyl ether), and polyoxyethylene distyrenated phenyl ethers. The compound with a six-membered ring structure including a conjugated double bond may be used alone, or two or more kinds thereof may be used in combination.

Polyoxyethylene distyrenated phenyl ether is represented by the formula (3).

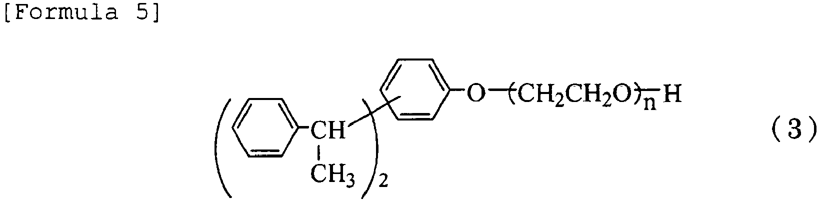

In the formula (3), n represents an integer in the range of 1 to 20, preferably 2 to 20, and more preferably 6 to 12. When n exceeds 20, dispersed flaked graphite may aggregate again. Since flaked graphite can be uniformly dispersed in a polar protic solvent, n is preferably 2 or more. Further, as the polyoxyethylene distyrenated phenyl ether represented by the formula (3), "EMULGEN A" (trade name) is commercially available from Kao Corporation.

By using the surfactants, flaked graphite can be highly dispersed in the polyolefin-based resin. The surfactant may be alone or two kinds thereof may be used in combination.

The content of the surfactant having a cyclic structure including a conjugated double bond is preferably 0.01 to 5 parts by weight, more preferably 0.01 to 1 parts by weight, and particularly preferably 0.01 to 0.1 parts by weight, relative to 100 parts by weight of the polyolefin-based resin. When the content of the surfactant is too small, flaked graphite may not be dispersed sufficiently in the polyolefin-based resin. When the content of the surfactant is too large, the surfactant bleeds out of the polyolefin-based resin composition, and as a result, the polyolefin-based resin composition may be difficult to be produced.

The surfactant having a cyclic structure including a conjugated double bond can be used particularly in combination with flaked graphite having a large carbon content, preferably flaked graphite having a carbon content of 80 atm% or more, and more preferably flaked graphite having a carbon content of 90 atm% or more. The flaked graphite having a large carbon content is rich in the flat SP2 network, and therefore is likely to interact with the surfactant in the graphene sheet. Thus, the flaked graphite cannot aggregate in the polyolefin-based resin composition and can be uniformly dispersed in a stable state. The carbon content of the flaked graphite can be measured by ESCA.

Further, the polyolefin-based resin composition may contain a coloring agent such as a pigment or a dye, an antioxidant, a light stabilizer, a thermal stabilizer, and a lubricant within a range that does not deteriorate the physical properties of such.

The present invention is also directed to a method for producing a polyolefin-based resin composition according to claim 3 including the steps of mixing a polar protic solvent, a surfactant having a cyclic structure including a conjugated double bond, and flaked graphite to produce a dispersion solution, and mixing the dispersion solution and polyolefin-based resin to produce a polyolefin-based resin composition is preferably used.

A polar protic solvent, a surfactant having a cyclic structure including a conjugated double bond, and flaked graphite are mixed to produce a dispersion solution. The order of mixing each component is not particularly limited. It is preferable that a polar protic solvent, a surfactant having a cyclic structure including a conjugated double bond, and flaked graphite be added in this order and mixed. Further, flaked graphite may aggregate.

The type of polar protic solvent to be used is not particularly limited, and examples thereof may include alcohols such as 1-butanol, 1-propanol, methanol, and ethanol, carboxylic acids such as acetic acid and formic acid, and water. From the viewpoints of proper dielectric constant (proper polarity), at least one kind of compound selected from the group consisting of 1-butanol, 1-propanol, methanol, ethanol, acetic acid, and formic acid is preferable. The polar protic solvent may be used alone, or two or more kinds thereof may be used in combination.

When the content of flaked graphite used during the production of dispersion solution is small, the obtained polyolefin-based resin composition may not exhibit a function attributed to the flaked graphite. When the content is large, the flaked graphite may aggregate in the dispersion solution. Therefore, the content of flaked graphite used during the production of dispersion solution is preferably 0.1 to 1.5 parts by weight, and more preferably 0.1 to 1 parts by weight, relative to 100 parts by weight of the polar protic solvent.

In the production of the dispersion solution, a surfactant having a cyclic structure including a conjugated double bond is used. Since the surfactant has a moiety capable of forming a hydrogen bond, the moiety capable of forming a hydrogen bond exhibits a strong interaction with the polar protic solvent, and the surfactant is well dissolved in the polar protic solvent.

Further, in the surfactant having a cyclic structure including a conjugated double bond, the cyclic structure including a conjugated double bond strongly interacts with π electrons of the flaked graphite. The flaked graphite is coated with the surfactant. As described above, the surfactant also exhibits strong interaction with the polar protic solvent.

Under this situation, flaked graphite, a surfactant having a cyclic structure including a conjugated double bond, and a polar protic solvent are mixed to obtain a mixture. The mixture is stirred to coat the surface of the flaked graphite with the surfactant having a cyclic structure including a conjugated double bond. As a result, the flaked graphite does not aggregate and is instead uniformly dispersed in the polar protic solvent.

When flaked graphite aggregates, the position of a surfactant which has a cyclic structure including a conjugated double bond and is interacted with the flaked graphite changes relative to that of the flaked graphite. The displacement of the surfactant relative to the flaked graphite gives the aggregate of flaked graphite separation force, and the aggregate of the flaked graphite is crushed to form flaked graphite.

The surface of flaked graphite obtained by crushing the aggregate of flaked graphite is coated with the surfactant having a cyclic structure including a conjugated double bond, and the flaked graphite does not aggregate and is instead uniformly dispersed in the polar protic solvent.

When the content of the surfactant having a cyclic structure including a conjugated double bond in the production of the mixture is small, the dispersibility of the flaked graphite in the dispersion solution may be decreased. When the content is large, the surfactant having a cyclic structure including a conjugated double bond may aggregate. Therefore, the content of the surfactant having a cyclic structure including a conjugated double bond in the production of the mixture is preferably 0.05 to 20 parts by weight, and more preferably 0.1 to 5 parts by weight, relative to 100 parts by weight of the polar protic solvent.

The production of the mixture of the flaked graphite, the polar protic solvent, and the surfactant having a cyclic structure including a conjugated double bond is not limited as long as they are mixed. The respective components need not be uniformly mixed. However, it is preferable that the respective components be uniformly mixed.

The mixture is stirred, and if necessary, the aggregate of the flaked graphite is crushed to form flaked graphite. Thus, a dispersion solution in which the flaked graphite is dispersed in the polar protic solvent can be obtained.

As a method for stirring the mixture, the general-purpose stirrer may be used to stir the mixture. The type of stirrer to be used is not particularly limited, and examples thereof may include a nanomizer, an ultrasonic irradiation device, a ball mill, a sand mill, a basket mill, a three roll mill, a planetary mixer, a bead mill, and a homogenizer. An ultrasonic irradiation device is preferable since the flaked graphite can be uniformly dispersed in the polar protic solvent while crushing of the flaked graphite is prevented as much as possible.

As conditions in the irradiation of the mixture with an ultrasonic wave, the frequency is preferably 20 to 30 kHz, and more preferably 25 to 30 kHz, the output is preferably 500 to 650 W, and more preferably 550 to 600 W, and the irradiation time with an ultrasonic wave is preferably 30 to 300 minutes, and more preferably 30 to 90 minutes. As described above, even when the irradiation time with an ultrasonic wave is short, the flaked graphite can be highly dispersed in the polar protic solvent.

When the flaked graphites exist in the form of aggregate, the mixture is stirred to apply crushing force to the aggregate of flaked graphite through the surfactant having a cyclic structure including a conjugated double bond. Thus, the flaked graphite is formed. The surface of the flaked graphite is coated with the surfactant having a cyclic structure including a conjugated double bond and is stably dispersed in the polar protic solvent. The obtained dispersion solution has a state in which the flaked graphite is uniformly dispersed in the polar protic solvent.

The content of polar protic solvent in the dispersion solution is preferably 70 to 99% by weight, and more preferably 85 to 99% by weight, relative to the whole components in the dispersion solution. The polar protic solvent in such an amount is used to prepare a dispersion solution in which the flaked graphite is highly dispersed in the polar protic solvent.

The average particle diameter of flaked graphite dispersed in the dispersion solution is determined as a number distribution mean measured by a particle size distribution measuring device. When the average particle diameter is small, the specific surface area of flaked graphite is too large, and the flaked graphite may aggregate again. When the average particle diameter is large, the flaked graphite may be precipitated in the dispersion solution. Therefore, the average particle diameter of flaked graphite dispersed in the dispersion solution is preferably 0.5 to 10 µm. As a particle size distribution measuring device, "AccuSizer 780" (trade name) is commercially available from Particle Sizing Systems.

The thickness of the flaked graphite dispersed in the dispersion solution is observed by a transmission electron microscope. When the thickness is thin, the specific surface area of the flaked graphite is too large, and the flaked graphite may aggregate again. When the thickness is thick, the flaked graphite may be precipitated in the dispersion solution. Therefore, the thickness of the flaked graphite dispersed in the dispersion solution is preferably 1 to 300 nm. The thickness of the flaked graphite is the maximum dimension of the flaked graphite in a direction perpendicular to the surface of the flaked graphite seen from a direction in which the area of the flaked graphite is largest. The thickness of the flaked graphite observed by a transmission electron microscope is an arithmetic mean of all thicknesses of flaked graphites present in 10 optional visual fields. The thicknesses are measured by the transmission electron microscope and the arithmetic mean is calculated.

Examples of the transmission electron microscope may include Field Emission Scanning Micro Scope (FE-SEM, "S-800" (trade name) available from Hitachi, Lid.).

The thus obtained dispersion solution and polyolefin-based resin are mixed to prepare a polyolefin-based resin composition in which the flaked graphite is uniformly dispersed in the polyolefin-based resin. Specifically, the dispersion solution is added to and mixed in a polyolefin-based resin heated in a melting state to disperse the flaked graphite in the polyolefin-based resin. At this time, the polar protic solvent constituting the dispersion solution is removed by evaporation to prepare a polyolefin-based resin composition in which the flaked graphite is uniformly dispersed in the polyolefin-based resin. Alternatively, the dispersion solution is heated to evaporate and remove the polar protic solvent to prepare a mixture containing the flaked graphite and the surfactant having a cyclic structure including a conjugated double bond. The mixture is mixed in the polyolefin-based resin to prepare a polyolefin-based resin composition in which the flaked graphite is uniformly dispersed in the polyolefin-based resin.

In the obtained polyolefin-based resin composition, the flaked graphite is dispersed in the polyolefin-based resin and the surfactant having a cyclic structure including a conjugated double bond lies between the polyolefin-based resin and the flaked graphite. The dispersibility of the flaked graphite in the polyolefin-based resin is improved due to the surfactant having a cyclic structure including a conjugated double bond. Therefore, the flaked graphite does not aggregate in the polyolefin-based resin and is instead uniformly dispersed.

The dispersion solution and the polyolefin-based resin are mixed preferably by adding the dispersion solution to the polyolefin-based resin, more preferably by adding dropwise or spraying the dispersion solution onto the polyolefin-based resin, and particularly preferably by adding dropwise the dispersion solution to the polyolefin-based resin.

The polyolefin-based resin during addition of the dispersion solution is preferably in the melting state. In this way, the polyolefin-based resin and the flaked graphite can be uniformly mixed. Further, the polar protic solvent in the dispersion solution can be evaporated by the heat from the polyolefin-based resin and removed.

The temperature of the polyolefin-based resin during addition of the dispersion solution is preferably 150 to 190°C, and more preferably 170 to 190°C. It is preferable that the dispersion solution be added to the polyolefin-based resin melted at such temperatures.

The general-purpose mixer may be used to mix the dispersion solution and the polyolefin-based resin. For example, a cylindrical mixer, a double-wall cone mixer, a high-speed stirring mixer, a V-shape mixer, a ribbon mixer, a screw mixer, a fluidized furnace rotary disk mixer, an air mixer, a double arm kneader, an inner mixer, a pulverizing kneader, a rotary mixer, or a screw extruder may be used.

The polyolefin-based resin composition is extruded in a sheet configuration, for example, from an extruder, and if necessary, laminated and bonded with another sheet. The layered body is molded into a desired shape by a general molding method such as press molding to obtain a molded product having a desired shape with ease.

### Advantageous Effects of Invention

In the polyolefin-based resin composition of the present invention, as described above, the flaked graphite does not aggregate and is highly dispersed in a polyolefin-based resin. As a result, a molded product formed using the polyolefin-based resin composition has excellent strength such as a high modulus of elongation and excellent mechanical and physical properties such as rigidity and shock resistance. The molded product has a low coefficient of linear expansion, and high dimensional stability. Further, the molded product has excellent electric properties such as conductivity, antistatic properties, antielectricity, and electromagnetic wave absorbability. Therefore, the molded product can be used for various applications such as parts for office devices, parts for information systems, parts for communication systems, a material that is suitable for use as the exterior panels of automobiles, and a sheet metal replacement material.

### Brief Description of the Drawings

Fig. 1 is a photograph of polyolefin-based resin sheet produced in Example 1.
Fig. 2 is a photograph of polyolefin-based resin sheet produced in Comparative Example 1.

### Description of Embodiments

Hereinafter examples of the present invention will be described. It should be appreciated, however, that the present invention is not limited to these examples.

### (Example 1)

100 parts by weight of polypropylene ("J-721GR" (trade name) available from Prime Polymer Co., Ltd., modulus of elongation: 1.2 GPa, coefficient of linear expansion: 11 x 10⁻⁵ /K), 5 parts by weight of flaked graphite ("XGnP-5" (trade name) available from XG SCIENCE, mean size in the planar direction of graphene sheet: 5 µm, number of layers of graphene sheet: 180, carbon content: 96.1 atm%), and 5 parts by weight of styrene-ethylene/propylene-styrene block copolymer ("SEPTON SEPS 2063" (trade name) available from Kuraray Co., Ltd., content of styrene component: 13% by weight) as the compound with a six-membered ring structure were supplied to an extruder, and melted and kneaded to obtain a polyolefin-based resin composition. The polyolefin-based resin composition was extruded through a T-die connected to the tip of the extruder to obtain a polyolefin-based resin sheet with a thickness of 0.5 mm.

### (Example 2)

A polyolefin-based resin sheet was obtained in the same manner as in Example 1 except that 5 parts by weight of styrene-ethylene/propylene-styrene block copolymer ("SEPTON S2104" (trade name) available from Kuraray Co., Ltd., content of styrene component: 65% by weight) was used instead of 5 parts by weight of styrene-ethylene/propylene-styrene block copolymer ("SEPTON SEPS 2063" (trade name) available from Kuraray Co., Ltd., content of styrene component: 13% by weight) as the compound with a six-membered ring structure.

### (Example 3)

A polyolefin-based resin sheet was obtained in the same manner as in Example 1 except that 5 parts by weight of styrene-ethylene/butylene-styrene block copolymer ("SEPTON S8007" (trade name) available from Kuraray Co., Ltd., content of styrene component: 30% by weight) was used instead of 5 parts by weight of styrene-ethylene/propylene-styrene block copolymer ("SEPTON SEPS 2063" (trade name) available from Kuraray Co., Ltd., content of styrene component: 13% by weight) as the compound with a six-membered ring structure.

### (Example 4)

A polyolefin-based resin sheet was obtained in the same manner as in Example 1 except that 5 parts by weight of styrene-ethylene/butylene-styrene block copolymer ("SEPTON S8104" (trade name) available from Kuraray Co., Ltd., content of styrene component: 60% by weight) was used instead of 5 parts by weight of styrene-ethylene/propylene-styrene block copolymer ("SEPTON SEPS 2063" (trade name) available from Kuraray Co., Ltd., content of styrene component: 13% by weight) as the compound with a six-membered ring structure.

### (Example 5)

A polyolefin-based resin sheet was obtained in the same manner as in Example 1 except that 5 parts by weight of styrene-ethylene/propylene block copolymer ("SEPTON S1001" (trade name) available from Kuraray Co., Ltd., content of styrene component: 35% by weight) was used instead of 5 parts by weight of styrene-ethylene/propylene-styrene block copolymer ("SEPTON SEPS 2063" (trade name) available from Kuraray Co., Ltd., content of styrene component: 13% by weight) as the compound with a six-membered ring structure.

### (Example 6)

A polyolefin-based resin sheet was obtained in the same manner as in Example 1 except that 5 parts by weight of styrene-(ethylene-ethylene/propylene)-styrene block copolymer ("SEPTON S4033" (trade name) available from Kuraray Co., Ltd., content of styrene component: 30% by weight) was used instead of 5 parts by weight of styrene-ethylene/propylene-styrene block copolymer ("SEPTON SEPS 2063" (trade name) available from Kuraray Co., Ltd., content of styrene component: 13% by weight) as the compound with a six-membered ring structure.

### (Example 7)

A polyolefin-based resin sheet was obtained in the same manner as in Example 1 except that 5 parts by weight of polyvinylpyrrolidone ("Polyvinylpyrrolidone K30" (trade name) available from Wako Pure Chemical Industries, Ltd.) was used as the compound with a five-membered ring structure instead of 5 parts by weight of styrene-ethylene/propylene-styrene block copolymer.

### (Comparative Example 1)

A polyolefin-based resin composition and a polyolefin-based resin sheet were obtained in the same manner as in Example 1 except that a styrene-ethylene/propylene-styrene block copolymer was not used.

The moduli of elongation and coefficients of linear expansion of the obtained polyolefin-based resin sheets were measured as described below, and Table 1 shows the results.

### (Modulus of elongation)

A rectangular test piece with a length of 70 mm and a width of 6.0 mm was cut from the obtained polyolefin-based resin sheet, and the modulus of elongation of the test piece was measured in accordance with JIS K7161.

### (Coefficient of linear expansion)

A rectangular parallelepiped-shaped test piece with a length of 5 mm, a width of 5 mm, and a height of 10 mm was cut from the obtained polyolefin-based resin sheet, and the coefficient of linear expansion of the test piece was measured in accordance with JIS K7197.

**Table 1**

| | EXAMPLE 1 | EXAMPLE 2 | EXAMPLE 3 | EXAMPLE 4 | EXAMPLE 5 | EXAMPLE 6 | EXAMPLE 7 | COMPARATIVE EXAMPLE 1 |
|---|---|---|---|---|---|---|---|---|
| MODULUS OF ELONGATION (GPa) | 5.0 | 4.5 | 4.6 | 4.1 | 3.9 | 3.8 | 3.6 | 2.4 |
| COEFFICIENT OF LINEAR EXPANSION (10⁻⁵/K) | 5.0 | 5.5 | 5.4 | 6.3 | 6.5 | 7.0 | 7.2 | 8.8 |

### (Example 8)

0.05 parts by weight of polyoxyethylene distyrenated phenyl ether represented by the formula (3) ("EMULGEN A60" (trade name) available from Kao Corporation) was added to 5 parts by weight of ethanol, and 0.05 parts by weight of flaked graphite ("XGnP-5" (trade name) available from XG SCIENCE, mean size in the planar direction of layered face: 5 µm, number of layers: 180, carbon content: 96.1 atm%) was then added. The mixture was irradiated with an ultrasonic wave by an ultrasonic irradiation device ("PHENIXII 26 kHz" (trade name) manufactured by KAIJO corporation) at a frequency of 26 kHz and an output of 600 W for 60 minutes to produce a dispersion solution in which the flaked graphite was dispersed in ethanol.

To 100 parts by weight of homopropylene ("NOVATEC EA9" (trade name) available from Japan Polypropylene Corporation) that had been melted and kneaded at 180°C by Labo Plastomill ("R-100" (trade name) manufactured by Toyo Seiki Seisaku-sho, Ltd.), the whole amount of the dispersion solution was gradually added dropwise by a dropper and mixed to uniformly disperse polyoxyethylene distyrenated phenyl ether and flaked graphite in homopolypropylene. At the same time, ethanol was evaporated and removed, to thereby produce a polyolefin-based resin composition.

The polyolefin-based resin composition was supplied to an extruder, melted and kneaded at 200°C, and extruded through a T-die connected to the tip of the extruder to obtain a polyolefin-based resin sheet with a thickness of 0.1 mm.

### (Example 9)

A polyolefin-based resin sheet was produced in the same manner as in Example 8 except that the amount of polyoxyethylene distyrenated phenyl ether represented by the formula (3) was changed from 0.05 parts by weight to 0.1 parts by weight.

### (Example 10)

A polyolefin-based resin sheet was produced in the same manner as in Example 8 except that 0.05 parts by weight of polyoxyethylene tribenzyl phenyl ether ("EMULGEN B-66" (trade name) available from Kao Corporation) was used instead of polyoxyethylene distyrenated phenyl ether represented by the formula (3).

### (Example 11)

A polyolefin-based resin sheet was produced in the same manner as in Example 8 except that 0.05 parts by weight of polyoxyethylene octyl phenyl ether ("BLAUNON NK-808" (trade name) available from AOKI OIL INDUSTRIAL CO., LTD.) was used instead of polyoxyethylene distyrenated phenyl ether represented by the formula (3).

### (Example 12)

A polyolefin-based resin sheet was produced in the same manner as in Example 8 except that 0.05 parts by weight of polyoxyethylene nonyl phenyl ether ("BLAUNON N-509" (trade name) available from AOKI OIL INDUSTRIAL CO., LTD.) was used instead of polyoxyethylene distyrenated phenyl ether represented by the formula (3).

### (Example 13)

A polyolefin-based resin sheet was produced in the same manner as in Example 8 except that 0.05 parts by weight of polyoxyethylene dodecyl phenyl ether ("BLAUNON DP-9" (trade name) available from AOKI OIL INDUSTRIAL CO., LTD.) was used instead of polyoxyethylene distyrenated phenyl ether represented by the formula (3).

### (Comparative Example 2)

A polyolefin-based resin sheet was produced in the same manner as in Example 8 except that polyoxyethylene distyrenated phenyl ether was not used.

### (Evaluation)

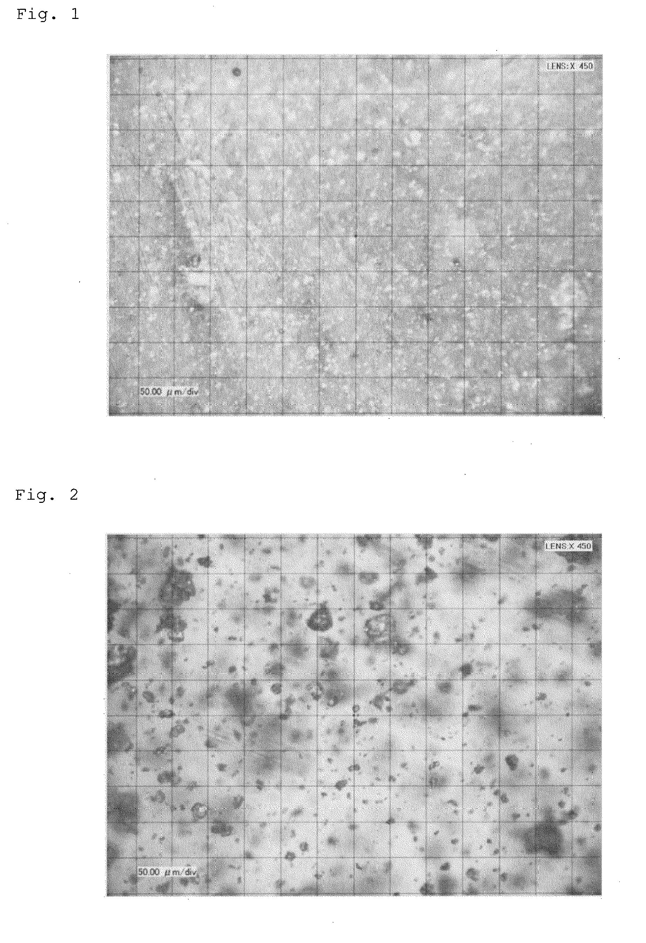

In the polyolefin-based resin sheets produced in Examples 8 to 13 and Comparative Example 2, the dispersion state of flaked graphite was observed by a microscope ("VHX-200" (trade name) manufactured by Keyence Corporation). Table 2 shows the results. In Table 2, "excellent" means that the aggregate of flaked graphite is not observed, "good" means that the number of aggregate of flaked graphite is less than one fourth of the total number of flaked graphite and the aggregate of flaked graphite with a diameter of 20 µm or more which were observed within the visual field, "not good" means that the number is one fourth or more to less than half, and "bad" means that the number is half or more. Fig. 1 shows a photograph of polyolefin-based resin sheet of Example 8 by the microscope. Fig. 2 shows a photograph of polyolefin-based resin sheet of Comparative Example 2 by the microscope.

As shown in Fig. 1, in the polyolefin-based resin sheet of Example 8, the flaked graphite does not aggregate and is instead uniformly dispersed in the resin. As shown in Fig. 2, in the polyolefin-based resin sheet of Comparative Example 2, the flaked graphite aggregates and the dispersibility is not good.

In the polyolefin-based resin sheets produced in Examples 8 to 13 and Comparative Example 2, the modulus of elongation and coefficient of linear expansion were measured as described above. Table 2 shows the results.

**Table 2**

| | EXAMPLE 8 | EXAMPLE 9 | EXAMPLE 10 | EXAMPLE 11 | EXAMPLE 12 | EXAMPLE 13 | COMPARATIVE EXAMPLE 2 |
|---|---|---|---|---|---|---|---|
| DISPERSION STATE OF FLAKED GRAPHITE | EXCELLENT | EXCELLENT | GOOD | EXCELLENT | GOOD | GOOD | BAD |
| MODULUS OF ELONGATION (GPa) | 3.3 | 3.7 | 3.5 | 3.4 | 3.3 | 3.3 | 2.1 |
| COEFFICIENT OF LINEAR EXPANSION (10⁻⁵/K) | 7.2 | 7.1 | 7 | 7.4 | 7.5 | 7.6 | 9.2 |

### Industrial Applicability

The polyolefin-based resin composition of the present invention can be molded into the desired shape using general molding methods and a molded product having a desired shape can be obtained easily. The molded product has excellent mechanical strength such as a high modulus of elongation, a low coefficient of linear expansion, and high dimensional stability. Therefore, the molded product can be used for various applications such as parts for office devices, parts for information systems, parts for communication systems, a material that is suitable for use as the exterior panels of automobiles, and a sheet metal replacement material. The process for producing the polyolefin-based resin composition of the present invention can be used to produce the polyolefin-based resin composition capable of producing a molded product used for various applications such as parts for office devices, parts for information systems, parts for communication systems, a material that is suitable for use as the exterior panels of automobiles, and a sheet metal replacement material.

## Claims

1. A polyolefin-based resin composition, comprising a polyolefin-based resin, flaked graphite, and either one or both of a compound with a six-membered ring structure and a compound with a five-membered ring structure,
wherein the compound with a six-membered ring structure is a surfactant having a six-membered ring structure including a conjugated double bond and is at least one type selected from the group consisting of a polyoxyethylene distyrenated phenyl ether represented by the following formula, a polyoxyalkylene octyl phenyl ether, polyoxyalkylene nonyl phenyl ether, polyoxyalkylene dodecyl phenyl ether, and polyoxyalkylene benzyl phenyl ether, or at least one type of a polymer containing a styrene component selected from the group consisting of a styrene-ethylene/propylene block copolymer, a styrene-ethylene/propylene-styrene block copolymer, a styrene-ethylene/butylene-styrene block copolymer, and a styrene-(ethylene-ethylene/propylene)-styrene block copolymer,
wherein the compound with a five-membered ring structure is polyvinylpyrrolidone, 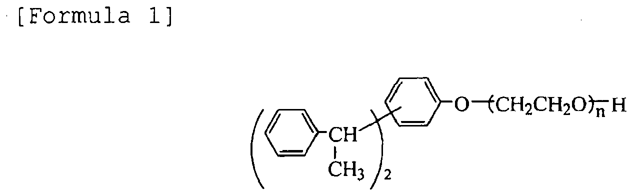 wherein n is an integer in a range of 1 to 20.

2. The polyolefin-based resin composition according to claim 1, wherein a content of the styrene component in the polymer containing the styrene component is 40% by weight or less.

3. A method for producing a polyolefin-based resin composition, comprising the steps of: mixing a polar protic solvent, a surfactant having a six-membered ring structure including a conjugated double bond, and flaked graphite to produce a dispersion solution; and mixing the dispersion solution and a polyolefin-based resin and dispersing the flaked graphite in the polyolefin-based resin while evaporating and removing the polar protic solvent to produce a polyolefin-based resin composition,
wherein the surfactant having a six-membered ring structure including a conjugated double bond is at least one type selected from the group consisting of a polyoxyethylene distyrenated phenyl ether represented by the following formula, a polyoxyalkylene octyl phenyl ether, polyoxyalkylene nonyl phenyl ether, polyoxyalkylene dodecyl phenyl ether, and polyoxyalkylene benzyl phenyl ether, 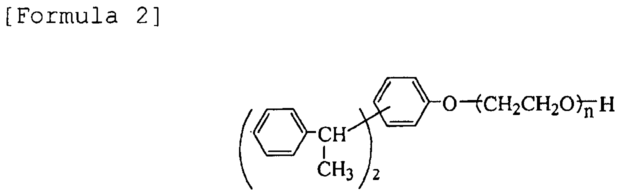 wherein n is an integer in a range of 1 to 20.

4. The polyolefin-based resin composition according to claim 1,
wherein the compound with a six-membered ring structure is at least one type of a polymer containing a styrene component selected from the group consisting of a styrene-ethylene/propylene block copolymer, a styrene-ethylene/propylene-styrene block copolymer, a styrene-ethylene/butylene-styrene block copolymer, and a styrene-(ethylene-ethylene/propylene)-styrene block copolymer, and
wherein the compound with a five-membered ring structure is polyvinylpyrrolidone.

5. The polyolefin-based resin composition according to claim 1,
wherein the polyolefin-based resin composition comprises the polyolefin-based resin, the flaked graphite, and the compound with a six-membered ring structure,
wherein the compound with a six-membered ring structure is at least one type selected from the group consisting of a polyoxyethylene distyrenated phenyl ether represented by the following formula, a polyoxyalkylene octyl phenyl ether, polyoxyalkylene nonyl phenyl ether, polyoxyalkylene dodecyl phenyl ether, and polyoxyalkylene benzyl phenyl ether, 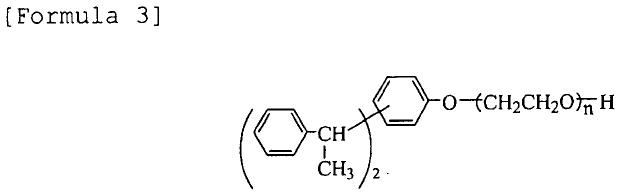 wherein n is an integer in a range of 1 to 20.

## Patentansprüche

1. Polyolefin-basierte Harzzusammensetzung, umfassend ein Polyolefin-basiertes Harz, Lamellengraphit und entweder eines oder beide aus einer Verbindung mit einer sechsgliedrigen Ringstruktur und einer Verbindung mit einer fünfgliedrigen Ringstruktur,
worin die Verbindung mit der sechsgliedrigen Ringstruktur ein Tensid mit einer sechsgliedrigen Ringstruktur einschließlich einer konjugierten Doppelbindung darstellt und mindestens eines Typs ist, ausgewählt aus der Gruppe, bestehend aus Polyoxyethylendistyrolphenylether gemäß der folgenden Formel, einem Polyoxyalkylenoctylphenylether, Polyoxyalkylennonylphenylether, Polyoxyalkylendodecylphenylether und Polyoxyalkylenbenzylphenylether, oder mindestens eines Typs eines Polymers, enthaltend eine Styrolkomponente, ausgewählt aus der Gruppe, bestehend aus einem Styrol-Ethylen/Propylen-Blockcopolymer, einem Styrol-Ethylen/Propylen-Stryrol-Blockcopolymer, einem Styrol-Ethylen/Butylen-Styrol-Blockcopolymer und einem Stryrol(Ethylen-Ethylen/Propylen)-Styrol-Blockcopolymer,
worin die Verbindung mit der fünfgliedrigen Ringstruktur Polyvinylpyrrolidon ist, 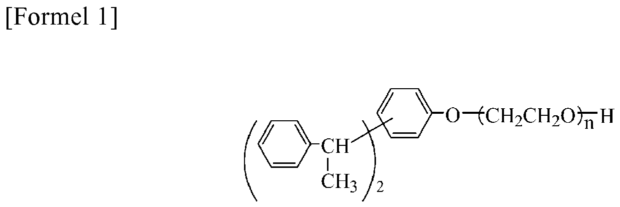 worin n eine ganze Zahl im Bereich von 1 bis 20 darstellt.

2. Polyolefin-basierte Harzzusammensetzung nach Anspruch 1, worin der Gehalt an Styrolkomponente in dem Polymer, enthaltend die Styrolkomponente, 40 Gew.% oder weniger beträgt.

3. Verfahren zur Herstellung einer Polyolefin-basierten Harzzusammensetzung, umfassend die Schritte: Mischen eines polaren protischen Lösungsmittels, eines Tensids mit einer sechsgliedrigen Ringstruktur einschließlich einer konjugierten Doppelbindung und von Lammellengraphit unter Bildung einer Dispersionslösung; und Mischen der Dispersionslösung und eines Polyolefin-basierten Harzes sowie Dispergieren des Lamellengraphits in dem Polyolefin-basierten Harz, während evakuiert wird und das polare protische Lösungsmittel entfernt wird, so dass eine Polyolefin-basierte Harzzusammensetzung gebildet wird,
worin das Tensid mit der sechsgliedrigen Ringstruktur einschließlich einer Doppelbindung mindestens eines Typs ist, ausgewählt aus der Gruppe, bestehend aus einem Polyoxyethylendistyrolphenylether dargestellt durch die folgende Formel, einem Polyoxyalkylenoctylphenylether, Polyoxyalkylennonyphenylether, Polyoxyalkylendodecylphenylether und Polyoxyalkylenbenzylphenylether, 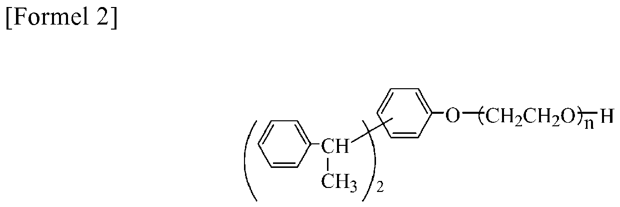 worin n eine ganze Zahl im Bereich von 1 bis 20 ist.

4. Polyolefin-basierte Harzzusammensetzung nach Anspruch 1, worin die Verbindung mit der sechsgliedrigen Ringstruktur mindestens eines Typs eines Polymers enthaltend eine Styrolkomponente ist, ausgewählt aus der Gruppe, bestehend aus einem Styrol-Ethylen/Propylen-Blockcopolymer, einem Styrol-Ethylen/Propylen-Stryrol-Blockcopolymer, einem Styrol-Ethylen/Butylen-Styrol-Blockcopolymer und einem Stryrol(Ethylen-Ethylen/Propylen)-Styrol-Blockcopolymer und,
worin die Verbindung mit der fünfgliedrigen Ringstruktur Polyvinylpyrrolidon ist.

5. Polyolefin-basierte Harzzusammensetzung nach Anspruch 1, worin die Polyolefinbasierte Harzzusammensetzung das Polyolefin-basierte Harz, Lamellengraphit und die Verbindung mit einer sechsgliedrigen Ringstruktur umfasst,
worin die Verbindung mit der sechsgliedrigen Ringstruktur mindestens eines Typs ist, ausgewählt aus der Gruppe, bestehend aus einem Polyoxyethylendistyrolphenylether, dargestellt durch die folgende Formel, einem Polyoxyalkylenoctylphenylether, Polyoxyalkylennonylphenylether, Polyoxyalkylendodecylphenylether und Polyoxyalkylenbenzylphenylether, 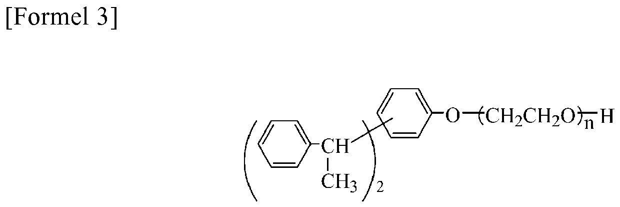 worin n eine ganze Zahl im Bereich von 1 bis 20 ist.

## Revendications

1. Composition de résine à base de polyoléfine, comprenant une résine à base de polyoléfine, du graphite en flocon et un ou deux d'un composé ayant une structure de cycle à six éléments et d'un composé ayant une structure de cycle à cinq éléments,
dans laquelle le composé ayant une structure de cycle à six éléments est un tensioactif ayant une structure de cycle à six éléments incluant une double liaison conjuguée et est au moins un type choisi dans le groupe constitué par un éther phénylique distyréné de polyoxyéthylène représenté par la formule suivante, un éther octylphénylique de polyoxyalkylène, un éther nonylphénylique de polyoxyalkylène, un éther dodécylphénylique de polyoxyalkylène et un éther benzylphénylique de polyoxyalkylène, ou au moins un type d'un polymère contenant un composant de styrène choisi dans le groupe constitué par un copolymère séquencé de styrène-éthylène/propylène, un copolymère séquencé de styrène-éthylène/propylène-styrène, un copolymère séquencé de styrène-éthylène/butylène-styrène et un copolymère séquencé de styrène-(éthylène-éthylène/propylène)-styrène,
dans laquelle le composé ayant une structure de cycle à cinq éléments est la polyvinylpyrrolidone, 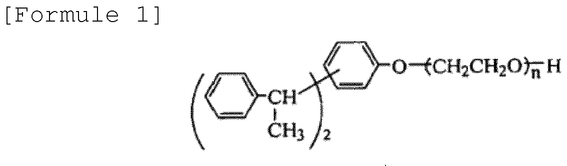 dans laquelle n est un nombre entier compris dans la plage allant de 1 à 20.

2. Composition de résine à base de polyoléfine selon la revendication 1, dans laquelle la teneur en composant styrène dans le polymère contenant le composant styrène est inférieure ou égale à 40 % en poids.

3. Procédé de production d'une composition de résine à base de polyoléfine, comprenant les étapes consistant à : mélanger un solvant protique polaire, un tensioactif ayant une structure de cycle à six éléments incluant une double liaison conjuguée, et du graphite en flocons pour produire une solution de dispersion ; et mélanger la solution de dispersion et une résine à base de polyoléfine et disperser le graphite en flocons dans la résine à base de polyoléfine tout en évaporant et en éliminant le solvant protique polaire pour produire une composition de résine à base de polyoléfine,
dans lequel le tensioactif ayant une structure de cycle à six éléments incluant une double liaison conjuguée est au moins un type choisi parmi un éther phénylique distyréné de polyoxyéthylène représenté par la formule suivante, un éther octylphénylique de polyoxyalkylène, un éther nonylphénylique de polyoxyalkylène, un éther dodécylphénylique de polyoxyalkylène et un éther benzylphénylique de polyoxyalkylène, 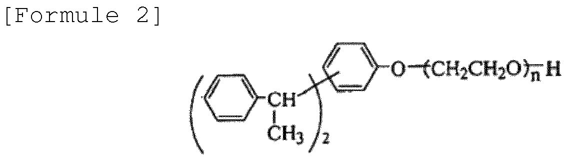 dans laquelle n est un nombre entier compris dans la plage allant de 1 à 20.

4. Composition de résine à base de polyoléfine selon la revendication 1,
dans laquelle le composé ayant une structure de cycle à six éléments est au moins un type d'un polymère contenant un composant styrène choisi dans le groupe constitué par un copolymère séquencé de styrène-éthylène/propylène, un copolymère séquencé de styrène-éthylène/propylène-styrène, un copolymère séquencé de styrène-éthylène/butylène-styrène et un copolymère séquencé de styrène-(éthylène-éthylène/propylène)-styrène, et
dans laquelle le composé ayant une structure de cycle à cinq éléments est la polyvinylpyrrolidone.

5. Composition de résine à base de polyoléfine selon la revendication 1,
dans laquelle la composition de résine à base de polyoléfine comprend la résine à base de polyoléfine, du graphite en flocon et le composé ayant une structure de cycle à six éléments,
dans laquelle le composé ayant une structure de cycle à six éléments est au moins un type choisi dans le groupe constitué par un éther phénylique distyréné de polyoxyéthylène représenté par la formule suivante, un éther octylphénylique de polyoxyalkylène, un éther nonylphénylique de polyoxyalkylène, un éther dodécylphénylique de polyoxyalkylène et un éther benzylphénylique de polyoxyalkylène, 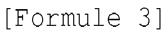 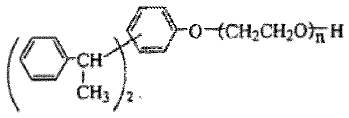 dans laquelle n est un nombre entier compris dans la plage allant de 1 à 20.
